# EUROPÄISCHE PATENTANMELDUNG

(11) **EP 0 944 127 A2**
(43) Veröffentlichungstag der Anmeldung: **22.09.1999**
(21) Anmeldenummer: 99103357.2
(22) Anmeldetag: 20.02.1999
(51) Int. Cl.: H01Q 1/30, H01Q 1/04, G01V 1/20

(54) **Schleppantenne**

(30) Priorität: 16.03.1998 DE 19811335
(71) Anmelder: STN ATLAS Elektronik GmbH, 28309 Bremen (DE)
(72) Erfinder: Busch, Rainer, 26131 Oldenburg (DE); Junge, Wilfried, 28309 Bremen (DE); Schütz, Rainer-Martin, 28816 Stuhr (DE)

(57) **Zusammenfassung**

Um Lufteinschlüsse im Akustikteil einer gelgefüllten Schleppantenne zu vermeiden, wird ein Gelkörper mit Hydrophonen, Elekronik-Bausteinen und Signalleitungen gegossen, dessen Durchmesser kleiner als der Durchmesser eines die Außenhaut der Schleppantenne bildenden Schlauchs ist. Der elastische Gelkörper wird zusammen mit Öl in den Schlauch eingebracht. Der Gelkörper nimmt des Öl quellend auf und füllt den Schlauch nach dem Quellprozeß ohne Blasenbildung. Durch das Mengenverhältnis vom Gel und Öl ist die Dichte der Schleppantenne so einstellbar, daß die Schleppantenne Auftrieb erhält und akustisch transparent ist. Gelgefüllte Schleppantennen werden aufgrund ihres geringen Durchmessers in der Wasserschalltechnik vorteilhaft auf kleinen Schleppfahrzeugen zum Detektieren und Peilen geräuschabstrahlender Wasserfahrzeuge eingesetzt.

## Beschreibung

Die Erfindung betrifft eine Schleppantenne der im Oberbegriff des Anspruchs 1 genannten Art.

Eine Schleppantenne wird in Peilanlagen der Wasserschalltechnik zum Detektieren und Orten schallabstrahlender Wasserfahrzeuge verwendet. Sie wird von einem Schleppfahrzeug, z.B. einem Oberflächenschiff oder U-Boot, durch das Wasser gezogen und bei Nichtgebrauch auf eine bordfeste Trommel aufgewickelt. Ihr Akustikteil besteht aus gleichartig aufgebauten, aneinander gekoppelten Sektionen mit Hydrophonen und elekronischen Bausteinen und weist eine beträchtliche Länge auf.

Aus der DE PS 195 18461 ist eine Schleppantenne bekannt deren Durchmesser ausschließlich von dem Durchmesser der verwendeten Hydrophone bestimmt wird. Die Hydrophone und elektronischen Bausteine befinden sich in einem mit Gel gefüllten Schlauch, der aus Polyethylen (PE) besteht und beim Schleppen entstehende Zugkräfte aufnimmmt, so daß sonst übliche Zugstränge im Schleppantenneninneren entfallen. Die Hydrophone, ggf. mit ihren zugeordneten elektronischen Bausteinen, wie Vorverstärker und A/D-Wandler, werden durch das nach dem Einfüllen in den Schlauch abbindende Gel fixiert. Durch den geringen Durchmesser können Schleppantennen sehr großer Länge hergestellt werden, die bequem und schnell und platzsparend an Bord untergebracht werden können. Wegen des geringen Volumens und Gewichts ist die Schleppantenne auch für einen Einsatz auf kleineren Schleppschiffen, wie Corvetten und U-Booten geeignet. Aufgrund ihrer großen Länge wird eine hohe Peilgenauigkeit erzielt. Der Schlauch und das Gel stellen keinen Sondermüll dar, und können umweltverträglich entsorgt werden.

Um eine exakte Plazierung der Hydrophone und ihrer elektronischen Bausteine in der Mitte des Schlauchs zu gewährleisten, wird zur Fixierung ein Nylonnetz mit wenigen elastischen Längsfäden verwendet und zusammen mit dem flüssigen Gel in den Schlauch eingeschwemmt. Aus fertigungstechnischen Gründen wird die Schleppantenne in Teilabschnitten mit einer Teillänge gefertigt, die wesentlich kleiner als die gewünschte, komplette Länge ist. Um möglichst wenige Teillängen miteinander verbinden zu müssen, die Stoßstellen bilden und Störgeräusche verursachen können, ist es wünschenswert, Abschnitte von mehr als 10 Metern in einem Füllvorgang herzustellen. Es hat sich gezeigt, daß eine Entlüftung dabei problematisch ist, um eine Blasenbildung im Gel zu verhindern.

Es ist Aufgabe der vorliegenden Erfindung eine Schleppantenne der im Oberbegriff des Anspruchs 1 genannten Art zu schaffen, bei der Lufteinschlüsse im Schlauch bei Verwendung von Gel als Füllmittel vermieden werden.

Diese Aufgabe wird erfindungsgemäß durch die im Merkmale im Kennzeichenteil des Anspruch 1 gelöst. Hydrophone für den Akustikteil der Schleppantenne befinden sich in einem länglichen Gelkörper mit einem geringeren Durchmesser als der Schlauch, der die Außenhaut der Schleppantenne bildet. Dieser längliche Gelkörper wird außerhalb des Schlauchs gefertigt und kann eine beliebige Länge aufweisen. Er bildet zusammen mit dem Schlauch ein Skelett der Schleppantenne. Es wird das Gewicht und das Volumen des Gelkörpers und Schlauchs bestimmt und daraus eine Skelettdichte ermittelt. Die Skelettdichte ist größer als die Dichte des die Schleppantenne umgebenden Wassers. Der Gelkörper wird in den Schlauch hineingezogen und der verbleibende Zwischenraum mit Öl aufgefüllt. Die Dichte des Öls ist wesentlich geringer als die Skelettdichte und die Dichte des Wassers. Es wird eine solche Menge Öl in den Schlauch gefüllt, daß die gesamte Dichte der Schleppantenne so eingestellt ist, daß die Schleppantenne im Wasser schwebt, also weder sinkt, noch einen Auftrieb aufweist. Ein großer Vorteil besteht darin, daß das Öl vom Gel aufgenommen wird, und das Gel dabei quillt und somit den Schlauch blasenfrei ausfüllt und sich an die Innenschlauchwand anpaßt. Lufteinschlüsse werden bei diesem Verfahren vermieden. Distanzstücke oder Borsten, die dafür sorgen, daß die Hydrophone mittig im Schlauch angeordnet sind, entfallen, da der Quellprozeß radial gleichmäßig zentrierend verläuft. Der besondere Vorteil der erfindungsgemäßen Schleppantenne besteht darin, daß ihr Einsatz auf eine bestimmte Wassertiefe optimal eingestellt werden kann.

Nach einer vorteilhaften Weiterführung der erfindungsgemäßen Schleppantenne nach Anspruch 2 werden außer den Hydrophonen elekronische Bausteine und Signalleitungen in den Gelkörper eingebracht, so daß sie in einfacher Weise bezüglich ihres Gewichts beim Bestimmen der benötigten Ölmenge berücksichtigt werden können. Wenn die Zugkräft nicht vom Schlauch aufgenommen werden können, werden zusätzlich Zugseile ebenfalls im Gelkörper angeordnet. Der Vorteil besteht darin, daß keine speziellen Formstücke notwendig sind, um die Zugseile zu führen und Hydrophone und elekronischen Bausteine aufzunehmen, vielmehr übernimmt der Gelkörper gleichzeitig die Funktion der Formstücke.

Ein weiterer Vorteil der erfindungsgemäßen Schleppantenne, nach Anspruch 3, besteht darin, daß auch größere Skelettdichten durch die Menge des Öls aufgefangen werden können, um einen gewünschten Auftrieb der Schleppantenne im Wasser einzustellen.

Als besonders vorteilhaft hat es sich erwiesen, gemäß der Weiterbildung nach Anspruch 4 als Gel einen Zwei-Komponenten-Silikonkautschuk einzusetzen und als Öl ein Isoparaffinöl zu verwenden, mit denen eine homogene Dichte erreichbar ist, wenn der Gelkörper ein Drittel des Schleppantennenvolumens einnimmt und das Öl zwei Drittel. Das Gel weist typischer Weise eine Dichte von 0,98 g/cm³ auf, das Öl weist Dichten zwischen 0,77 und 0,88 g/cm³ auf, so daß eine Volumenvergrößerung des Gelkörpers von 300% und eine Abnahme der Dichte auf Werte bei 0,8 g/cm³ erreicht werden können. Die Dichte ist über die gesamte Schleppantenne homogen, so daß die Schleppantenne einen schwebenden Zustand in einer vorgebbaren Wassertiefe einnehmen kann.

Weitere Vorteile bestehen darin, daß eine sehr gute Impedanzanpassung der Schleppantenne an das umgebende Medium Wasser erreicht ist, der Schlauch mit dem gequollenen Gelkörper akustisch transparent ist und durch das Vermeiden von Lufteinschlüssen keine Reflexionen im Schlauch auftreten können.

Der Vorteil der erfindungsgemäßen Weiterbildung der Schleppantenne nach Anspruch 5 besteht darin, daß durch das Tränken der Bausteine, Signalleitungen und Hydrophone Lufteinschlüsse im Gelkorper vermieden werden, da Öl und Gel beim Quellen eine innige Verbindung miteinander eingehen und in eventuelle Hohlräume hineinquellen.

Die Schleppantenne weist vor und hinter ihrem Akustikteil Dämpfungsmodule, sogenannte VIM-Sektionen auf, die dazu dienen den Akustikteil gegen mechanische Schwingungen beim Ziehen der Schleppantenne zu schützen. Besonders vorteilhaft ist es gemäß der Weiterbildung der Schleppantenne nach Anspruch 6, diese Teile jeweils als getrennte Sektionen aufzubauen und je Sektion einen getrennten Gelkörper zu verwenden, wobei gemäß der vorteilhaften Weiterbildung nach Anspruch 7 die Federelemente der Dämpfungsmodule sich in dem jeweiligen Gelkörper befinden. Beim Aufbauen der Schleppantenne wird in den die äußere Hülle bildenden Schlauch hintereinander ein Gelkörper eines Dämpfungsmoduls, der Gelkörper für den akustichen Teil und ein Gelkörper mit einem weiteren Dämpfungsmodul eingebracht. Anschließend wird der gesamte Schlauch entsprechend der gewünschten Dichte mit Öl gefüllt. Mechanisch vorteilhaft ist es gemäß der Weiterbildung nach Anspruch 8, die Signalleitungen ebenfalls in den Gelkörper einzubringen und nicht außerhalb im Öl zu verlegen. Ebenso können zur Erhöhung des Auftriebs zusätzliche Auftriebskörper aus z.B. Hartschaum in die Gelkörper der Dämpfungsmodule eingefügt werden.

Der Vorteil einer Schleppantenne nach der Erfindung besteht insbesondere auch darin, daß bei einer Verletzung des Schlauchs durch äußere Einwirkungen, weder Trimmflüssigkeit oder Öl auslaufen, noch Seewasser zu den Hydrophonen und elektronischen Bausteinen eindringen kann, da der aufgequollene Gelkörper wasserabweisend ist und sich auch nicht im Seewasser löst. Umweltverschmutzung oder ein Verrat durch ausfließendes Öl wie bei einer ölgefüllten Schleppantenne entstehen bei der Schleppantenne gemäß der Erfindung nicht.

Zur Herstellung des Gelkörpers für den Akustikteil der Schleppantenne oder die Dämpfungsmodule wird eine in Längsrichtung teilbare rohrförmige Gußform verwendet, in die als erstes eine Gelschicht gegossen wird. Nach dem Abbinden werden Hydrophone und/oder elektronischen Bausteine für den Akustikteil oder Federelemente und/oder Auftriebskörper für das Dämpfungsmodul auf die Gelschicht gelegt. Anschließend wird weiterhin Gel eingefüllt. Durch einen Steiger in der Gußform kann beim Gießvorgang die Luft entweichen. Der Vorteil des Herstellungsverfahrens gemäß Anspruch 9 besteht darin, daß beliebig lange Gelkörper hergestellt werden können, so daß die Schleppantenne mit einer kleineren Zahl von Sektionen aufgebaut werden kann.

Die Erfindung ist anhand eines in der Zeichnung dargestellten Ausführungsbeispiels für eine Schleppantenne im folgenden näher beschrieben. Es zeigen:
- Fig.1: eine Gußform für einen Gelkörper,
- Fig.2: ein Akustikteil und
- Fig.3: einen Dämpfungsmodul

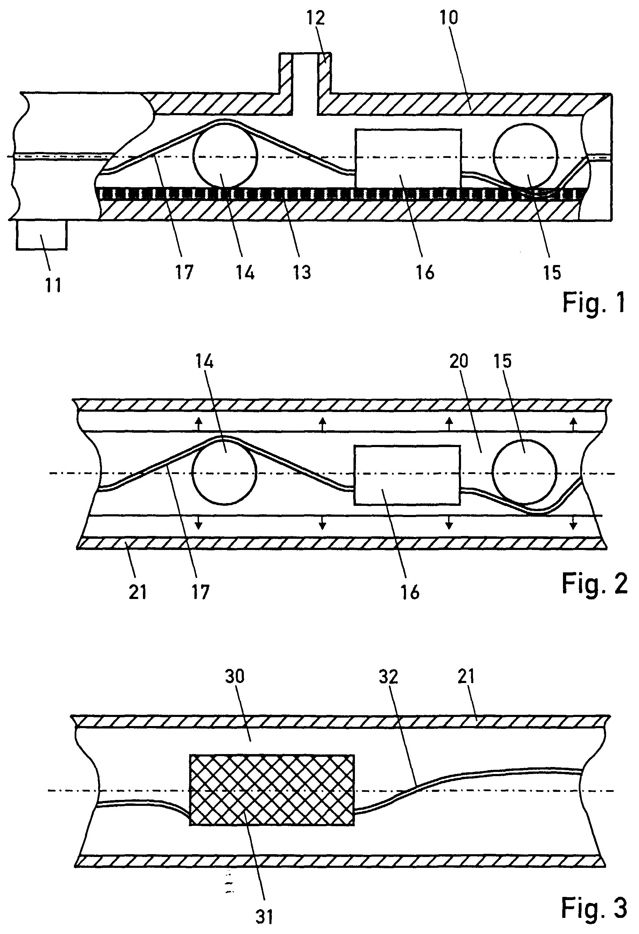

Fig. 1 zeigt im Schnitt ein Rohr 10 das in Längsrichtung teilbar ist, mit einem Einlaufstutzen 11 und einem Steiger 12 zum Gießen eines Gelkörpers. Über den Einlaufstutzen 11 wird Gel in das Rohr 10 eingefüllt. Nach dem Abbinden bildet sich eine Gelschicht 13, auf der Hydrophone 14 und 15 sowie elekronische Bausteine 16 und Signalleitungen 17 angeordnet sind, die mit Öl getränkt wurden. Beim weiteren Herstellungsvorgang wird flüssiges Gel solange eingefüllt, bis das Rohr 10 mit Gel gefüllt ist. Über den Steiger 12 entweicht Luft, so daß nach dem Abbinden der in Fig. 2 gezeigte Gelkörper 20 keine Luftblasen aufweist.

Als Gel wird ein dünnflüssiger, bei Raumtemperatur vulkanisierender Zwei-Komponenten-Silikonkautschuk verwendet, der unter der Handelsbezeichnung Silgel 612 von der Firma Wacker angeboten wird. Die beiden Komponenten dieses Silikonkautschuks sind dünnflüssig mit hoher Fließfähigkeit. Die Weichheit des gelartigen Vulkanisats wird durch das Mischungsverhältnis der beiden Komponenten beispielsweise 1 zu 1, oder 0,8 zu 1, eingestellt. Das abgebundene Gel hat eine spezifische Dichte von 0,97 g/cm und ist stark vibrationsdämpfend.

Fig. 2 zeigt den Gelkörper 20 in einem Schlauch 21, der die äußere Hülle einer Schleppantenne bildet. Der Schlauch 21 ist beispielsweise aus Polyethylen, hat eine spezifische Dichte von vorzugsweise 0,96 g/cm³ und nimmt beim Ziehen der Schleppantenne die Zugkräfte auf. In den Schlauch 21 wird Isoparaffinöl mit einer Dichte 0,76 g/cm³ eingefüllt. Der Gelkörper 20 quillt, wie mit den Pfeilen am Gelkörper 20 angedeutet, in radialer Richtung und füllt den Innenraum des Schlauchs 21 komplett aus.

Bei einer Schleppantenne mit einem Außendurchmesser von 30 mm, weist eine Sektion mit 30 Hydrophonen, 9 elektronischen Bausteinen und Signalleitungen, sowie 70 Metern Schlauch eine Skelettdichte von 1,95 g/cm³ auf. Zum Herstellen des Gelkörpers werden 25 Liter Gel, mit einer Dichte von 0,93 g/cm³ benötigt. 10 Liter Öl mit einer Dichte von 0,76 g/cm³ werden in den Schlauch gefüllt. Diese Sektion hat dann eine Dichte von 1,02 g/cm³, die der Dichte des Wassers in der Operationstiefe entspricht, in der die Schleppantenne eingesetzt wird.

Fig. 3 zeigt im Schnitt einen Dämpfungsmodul, der vor und hinter dem Akustikteil der Schleppantenne gemäß Fig. 2 eingesetzt wird. Im Schlauch 21 befindet sich ein aufgequollener Gelkörper 30, in den Hardschaumstücke 31 sowie Federelemente 32 eingebettet sind.

## Patentansprüche

1. Verfahren zum Herstellen einer Schleppantenne mit in einem gelgefüllten Schlauch angeordneten Hydrophonen, dadurch gekennzeichnet, daß ein Gelkörper (20) mit eingegossenen Hydrophonen (14, 15) mit einem Außendurchmesser kleiner als der Innendurchmesser des Schlauchs (21) angefertigt wird und zusammen mit Öl in den Schlauch (21) gegeben wird, wobei das Öl den Gelkörper (20) aufquellen läßt, und daß das Öl mit einer Dichte kleiner als die Dichte ihres Skeletts aus Gelkörper (20) und Schlauch (21) verwendet wird.

2. Verfahren nach Anspruch 1, dadurch gekennzeichnet, daß in den Gelkörper (20) mit den Hydrophonen (14,15) elektronische Bausteine (16) und/oder Signalleitungen (17) und/oder Zugseile eingebracht werden, die einen Akustikteil bilden.

3. Verfahren nach Anspruch 1 oder 2, dadurch gekennzeichnet, daß die Menge des Öls abhängig von dem gewünschten Auftrieb im Wasser gewählt wird.

4. Verfahren nach einem der Ansprüche 1 bis 3, dadurch gekennzeichnet, daß als Gel ein Zwei-Komponenten-Silikonkautschuk und als Öl ein Isoparaffinöl verwendet werden.

5. Verfahren nach einem der Ansprüche 1 bis 4, dadurch gekennzeichnet, daß die Hydrophone (14,15) und/oder elektronischen Bausteine (16) und/oder Signalleitungen (17) vor dem Herstellen des Gelkörpers (20) mit Öl getränkt werden.

6. Verfahren nach einem der Ansprüche 1 bis 5, dadurch gekennzeichnet, daß für jede Sektion ein Gelkörper (20) gegossen wird und die Gelkörper (20) aneinander gekoppelt werden.

7. Verfahren nach Anspruch 6, dadurch gekennzeichnet, daß Federelemente (32) für Dämpfungsmodule in einen Gelkörper eingebracht werden und vor und hinter dem Akustikteil in den gleichen Schlauch verbracht werden.

8. Verfahren nach Anspruch 7, dadurch gekennzeichnet, daß Signalleitungen (17) und/oder Auftriebskörper (31) in die Gelkörper der Dämpfungsmodule eingefügt werden.

9. Verfahren nach einem der Ansprüche 1 bis 8, dadurch gekennzeichnet, daß zum Herstellen des Gelkörpers (20) ein in Längsrichtung teilbarer Zylinder in Form eines Rohres (10) als Gußform verwendet wird, daß die Gußform einen Einfüllstutzen (11) und einen Steiger (12) aufweist, daß eine geringe Menge Gel in die Gußform gegossen wird und als Gelschicht (13) abbindet, daß auf die Gelschicht (13) die mit Öl getränkten Hydrophone (14,15) oder die Federelemente (32) und/oder elektronischen Bausteine (16) und/oder Signalleitungen (17) nebeneinander in Längsrichtung plaziert werden und die Gußform mit Gel aufgefüllt wird, daß nach dem Abbinden die Gußform geteilt wird, und der Gelkörper (20) aus der Gußform entfernt und in den Schlauch (21) hineingeführt wird und der Schlauch (21) mit Öl gefüllt wird.

10. Mit einem Verfahren nach einem der Ansprüche 1 bis 9 hergestellte Schleppantenne, dadurch gekennzeichnet, daß ihre Skelettdichte aus Gewicht und Volumen des Gelkörpers (20) und Schlauchs (21) größer ist als die Dichte des Wassers.
